# EUROPÄISCHE PATENTSCHRIFT

(11) **EP 3 207 404 B1**
(45) Veröffentlichungstag und Bekanntmachung des Hinweises auf die Patenterteilung: **18.11.2020**
(21) Anmeldenummer: 15778982.7
(22) Anmeldetag: 14.10.2015
(51) Int. Cl.: G01S 15/931, G01S 13/931, G01S 15/87, G01S 7/539, G01S 17/933, G01S 13/87, G01S 7/41, G01S 17/87

(54) **VERFAHREN ZUM ERFASSEN ZUMINDEST EINES OBJEKTS IN EINEM UMGEBUNGSBEREICH EINES KRAFTFAHRZEUGS, FAHRERASSISTENZSYSTEM SOWIE KRAFTFAHRZEUG**
METHOD FOR THE DETECTION OF AT LEAST ONE OBJECT IN THE VICINITY OF A VEHICLE, DRIVER ASSISTANT SYSTEM AND VEHICLE
PROCÉDÉ DE DETECTION DE AU MOINS UN OBJET DANS L'ENTOURAGE D'UN VÉHICULE, SYSTÈME DE CONDUITE ASSISTÉE ET VÉHICULE

(30) Priorität: 15.10.2014 DE 102014114999
(43) Veröffentlichungstag der Anmeldung: 23.08.2017
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE)
(74) Vertreter: Enge, Sebastian
(86) Internationale Anmeldenummer: PCT/EP2015/073734
(87) Internationale Veröffentlichungsnummer: WO 2016/059087

(56) Entgegenhaltungen:
- EP-A1- 1 764 630
- EP-A1- 1 923 717
- EP-B1- 1 308 751
- DE-A1-102007 035 219
- DE-A1-102007 039 348

## Beschreibung

Die vorliegende Erfindung betrifft ein Verfahren zum Erfassen zumindest eines Objekts in einem Umgebungsbereich eines Kraftfahrzeugs mittels eines Fahrerassistenzsystems, bei welchem in zeitlich aufeinanderfolgenden Messzyklen mit einem Abstandssensor jeweils ein Sendesignal ausgesendet wird und ein erstes und ein zweites Echo des von dem zumindest einen Objekt reflektierten Sendesignals empfangen wird und mittels einer Steuereinrichtung anhand des ersten Echos ein erster Abstandswert bestimmt wird, anhand des zweiten Echos ein zweiter Abstandswert bestimmt wird und eine Höhe des zumindest einen Objekts anhand des ersten und des zweiten Abstandswerts bestimmt wird. Die Erfindung betrifft außerdem ein Fahrerassistenzsystem für ein Kraftfahrzeug. Schließlich betrifft die vorliegende Erfindung ein Kraftfahrzeug mit einem solchen Fahrerassistenzsystem.

Das Interesse richtet sich vorliegend insbesondere auf Abstandssensoren, mit denen ein Abstand von einem Kraftfahrzeug zu einem Objekt bestimmt werden kann. Derartige Abstandssensoren können beispielsweise als Ultraschallsensoren, Radarsensoren oder als optische Sensoren ausgebildet sein. Aus dem Stand der Technik sind Fahrerassistenzsysteme bekannt, die anhand der Daten solcher Abstandssensoren den Fahrer beim Führen des Kraftfahrzeugs unterstützen. Beispielsweise werden Ultraschallsensoren dazu verwendet, einen Abstand zu einem Hindernis im Umgebungsbereich des Kraftfahrzeugs zu erfassen. Für bestimmte Anwendungsfälle, wie beispielsweise das autonome Parken oder für autonome Bremsvorgänge, gibt es verschiedene Ansätze, die Höhe von Objekten mit Hilfe von Abstandssensoren zu bestimmen. Somit können beispielsweise hohe und niedrige Hindernisse bzw. Objekte voneinander unterschieden werden. Hierbei ist es vor allem von entscheidender Bedeutung, dass die Objekthöhe, die geschätzt bzw. bestimmt wird, mit der tatsächlichen Höhe des Objekts übereinstimmt. Basierend auf dieser Information findet beispielsweise eine Entscheidung zum Bremseingriff statt, welche definiert, ob ein Objekt überfahrbar ist, sprich ein niedriges Objekt ist, oder nicht.

Heutige Methoden zur Abschätzung der Höhe eines Objekts berechnen entweder die Differenz der Objektannäherung zur gefahrenen Strecke. Diese Methode setzt eine sehr gute und leistungsempfindliche Berechnung der Eigenbewegung des Kraftfahrzeugs voraus, wobei der kritische Punkt hierbei die unbekannte Bewegung des Objekts selbst ist. Somit ist diese Methode nur bei statischen Objekten wirkungsvoll. Zudem sind aus dem Stand der Technik Verfahren bekannt, bei denen mehrere Echos eines von dem Abstandssensor ausgesendeten Sendesignals erfasst werden und bei denen die Höhe des zweiten Echos bestimmt wird. Dabei wird die Erkenntnis genutzt, dass es bei hohen Hindernissen in der Regel mehrere Signalwege zum Hindernis gibt. Der erste Weg ist das direkte Echo, der zweite Signalweg ist beispielsweise die Reflexion des Echos über den Boden. Dieser Signalweg ist somit etwas länger. Folgen in einer bestimmten Richtung nun zwei Echos kurz aufeinander, kann beispielsweise davon ausgegangen werden, dass das Objekt als hoch angenommen werden kann.

In diesem Zusammenhang beschreibt die EP 1 308 751 B1 ein Verfahren zum Betreiben eines Nahbereichserkennungssystems für ein Kraftfahrzeug. Hierbei kann die Höhe des Objekts anhand der Echosignale eines Abstandssensors bestimmt werden. Dabei ist es auch vorgesehen, dass das Kraftfahrzeug auf das zu detektierende Objekt zufährt. Ferner beschreibt die EP 1 643 271 B1 ein Verfahren zum Klassifizieren von Seitenbegrenzungen in einer Parklücke für ein Einparksystem eines Kraftfahrzeugs. Dabei werden die Echoimpulse eines Abstandssensors zum Klassifizieren der ermittelten Seitenbegrenzung ausgewertet. Hierbei werden insbesondere die Amplitude und eine Impulslänge des Echoimpulses mit vorgebbaren Schwellenwerten verglichen.

Zudem beschreibt die EP 1 910 866 B1 ein Verfahren zur Ermittlung der Tiefenbegrenzung einer Parklücke mittels Ultraschallsensoren. Dabei werden die Streuung und/oder die Verteilung der Echosignale eines Ultraschallsensors überprüft. Dabei wird die Tiefenbegrenzung festgestellt, wenn die Streubreite aller und/oder mehrerer, innerhalb der Verteilung eine Konzentration bildender Laufzeiten und/oder Abstände unterhalb eines vorgebbaren Schwellenwerts liegt. Auch DE 10 2007 035 219 A1, DE 10 2007 039 348 A1, EP 1 764 630 A1 und EP 1 923 717 A1 offenbaren Verfahren zur Höhenbestimmung von Objekten.

Es ist Aufgabe der vorliegenden Erfindung, eine Lösung aufzuzeigen, wie bei einem Fahrerassistenzsystem, welches Abstandssensoren nutzt, die Höhe eines Objekts zuverlässiger bestimmt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Erfassen zumindest eines Objekts in einem Umgebungsbereich eines Kraftfahrzeugs mittels eines Fahrerassistenzsystems. Dabei wird in zeitlich aufeinanderfolgenden Messzyklen mit einem Abstandssensor jeweils in jedem Messzyklus ein Sendesignal ausgesendet und ein erstes und ein zweites Echo des von dem zumindest einen Objekt reflektierten Sendesignals empfangen. Zudem wird mittels einer Steuereinrichtung anhand des ersten Echos ein erster Abstandswert bestimmt, anhand des zweiten Echos wird ein zweiter Abstandswert bestimmt und eine Höhe des zumindest einen Objekts wird anhand des ersten Abstandswerts und des zweiten Abstandswerts bestimmt. Dabei werden die Messzyklen während einer Relativbewegung des Kraftfahrzeug zu dem zumindest einen Objekt durchgeführt. Für zumindest zwei der Messzyklen wird jeweils ein Differenzwert bestimmt, welcher einen Unterscheid zwischen dem zweiten und dem ersten Abstandswert beschreibt, und die Höhe des zumindest einen Objekts wird anhand der Änderung des jeweils bei den zumindest zwei Messzyklen bestimmten Differenzwerts bestimmt.

Das Verfahren dient zum Erfassen zumindest eines Objekts in einer Umgebung des Kraftfahrzeugs. Ein oder mehrere Objekte in dem Umgebungsbereich des Kraftfahrzeugs sollen also charakterisiert werden. Insbesondere soll die Höhe des zumindest einen Objekts bestimmt werden. Zu diesem Zweck wird mit einem Abstandssensor des Fahrerassistenzsystems eine Mehrzahl von Messzyklen durchgeführt. Der Abstandssensor kann beispielsweise ein Radarsensor, ein Laserscanner oder ein Ultraschallsensor sein. In jedem der Messzyklen wird mit dem Abstandssensor ein Sendesignal ausgesendet. Dieses Sendesignal wird von dem zumindest einen Objekt in dem Umgebungsbereich des Kraftfahrzeugs reflektiert und trifft als Echo wieder auf den Abstandssensor. Dabei werden üblicherweise mehrere Echos des Sendesignals empfangen. Anhand der Laufzeit zwischen dem Aussenden des Sendesignals und dem Empfangen des jeweiligen Echos kann ein Abstand zwischen dem Abstandssensor und dem Objekt bestimmt werden. Anhand des ersten Echos wird ein erster Abstandswert anhand der Laufzeit zwischen dem Aussenden des Sendesignals und dem Empfangen des ersten Echos bestimmt. Zudem wird ein zweiter Abstandswert anhand der Laufzeit zwischen dem Aussenden des Sendesignals und dem Empfangen des zweiten Echos bestimmt.

Während die Messzyklen durchgeführt werden, kann das Kraftfahrzeug relativ zu dem zumindest einen Objekt bewegt werden. Das Kraftfahrzeug kann sich also auf das zumindest eine Objekt zu bewegen. Alternativ dazu kann sich das Kraftfahrzeug von dem zumindest einen Objekt weg bewegen. Es kann auch vorgesehen sein, dass sich das zumindest einen Objekt bewegt. In jedem der Messzyklen wird ein Differenzwert bestimmt, welcher den Unterschied zwischen dem zweiten und dem ersten Abstandswert beschreibt. Von zumindest zwei der Messzyklen, insbesondere zeitlich aufeinanderfolgenden Messzyklen, wird der Differenzwert verglichen. Es wird also ein erster Differenzwert, der bei einem ersten Messzyklus bestimmt wird, mit einem zweiten Differenzwert, der bei einem zweiten Messzyklus bestimmt wird, verglichen. Somit kann eine Änderung des Differenzwerts zwischen zwei Messzyklen bestimmt werden. Diese Änderung des Differenzwerts wird dann herangezogen, um die Höhe des Objekts zu bestimmen.

Der vorliegenden Erfindung liegt die Erkenntnis zugrunde, dass unterschiedliche Objekte einen Unterschied zwischen dem ersten und dem zweiten Echo aufweisen. Wenn nur eine Messung durchgeführt wird, bei welcher das Kraftfahrzeug nicht relativ zu dem zumindest einen Objekt bewegt wird, kann beispielsweise nicht unterschieden werden, ob es sich um ein hohes oder um mehrere niedrige Objekte handelt. Zu diesem Zweck wird die Differenz zwischen den Echos ausgehend von unterschiedlichen Positionen bestimmt. Somit kann das Objekt genauer charakterisiert werden und insbesondere kann die Höhe des Objekts zuverlässiger geschätzt werden.

Bevorzugt wird das zumindest eine Objekt als hoch charakterisiert, falls die Änderung des Differenzwerts einen vorbestimmten Schwellenwert überschreitet. Wenn sich der Differenzwert mit der Relativbewegung des Kraftfahrzeugs zu dem zumindest einen Objekt ändert, kann davon ausgegangen werden, dass es sich um ein hohes Objekt handelt. Dabei wird berücksichtigt, dass sich das Verhältnis zwischen dem ersten und dem zweiten Abstandswert in Abhängigkeit von der Entfernung des Kraftfahrzeugs zu dem Objekt ändert. Wenn der Differenzwert in Abhängigkeit von der Zeit im Wesentlichen konstant bleibt, kann davon ausgegangen werden, dass die Echos nicht von Reflexion eines hohen Objekts stammen.

In einer weiteren Ausführungsform wird für jeden der Messzyklen ein Referenzwert für den Differenzwert bestimmt und der Referenzwert wird mit dem bestimmten Differenzwert verglichen. Der Referenzwert kann auf der Grundlage gebildet werden, dass sich vor dem Kraftfahrzeug ein hohes Objekt befindet. Hierbei kann mit hoher Wahrscheinlichkeit berechnet werden, wie das Sendesignal von dem Objekt reflektiert wird und durch welche Reflexion des Sendesignals das erste und das zweite Echo bereitgestellt werden. Auf dieses Weise kann der Differenzwert mit dem Referenzwert plausibilisiert werden. Somit kann das Objekt zuverlässig charakterisiert werden.

In einer weiteren Ausgestaltung wird bei dem Vergleich des Referenzwerts mit dem Differenzwert ein Toleranzwert berücksichtigt. Dieser Toleranzwert kann von dem bestimmten Differenzwert abgezogen werden. Alternativ oder zusätzlich kann der bestimmte Differenzwert mit dem Toleranzwert addiert werden. Auf diese Weise können Messungenauigkeiten bei der Bestimmung des ersten und des zweiten Abstands berücksichtigt werden.

Bevorzugt wird der Referenzwert anhand eines Schätzwerts für den zweiten Abstandswert bestimmt, welcher anhand des ersten Abstandswerts berechnet wird. Das erste Echo kann von dem Abstandssensor entsprechend empfangen werden. Anhand des ersten Echos kann der erste Abstandswert berechnet werden. Für den zweiten Abstandswert wird ein Schätzwert berechnet. Dieser kann anhand der geometrischen Gegebenheiten zwischen dem Kraftfahrzeug und dem Objekt bestimmt werden, wobei angenommen wird, dass es sich um ein hohes Objekt handelt. Für ein hohes Signal können die Laufwege des Ultraschallsignals entsprechend vorbestimmt werden. Somit kann ein Schätzwert für den zweiten Abstandswert bestimmt werden. Dieser Schätzwert kann auch herangezogen werden, um den bestimmten zweiten Abstandswert, der anhand des zweiten Echos bestimmt wird, zu plausibilisieren.

Bevorzugt wird der Schätzwert für den zweiten Abstandswert unter der Annahme bestimmt, dass das zweite Echo von einer Reflexion des Sendesignals von einem Bereich eines Fußpunkts des zumindest einen Objekts stammt. Unter Fußpunkt ist vorliegend der Bereich des Objekts zu verstehen, mit dem das Objekt beispielsweise an eine Oberfläche, insbesondere eine Fahrbahnoberfläche, angrenzt. So kann beispielsweise angenommen werden, dass der erste Abstandswert die kürzeste Entfernung zwischen dem Abstandssensor und dem Objekt beschreibt. Ferner kann angenommen werden, dass der zweite Abstandswert die Entfernung zwischen dem Abstandssensor und dem Fußpunkt des Objekts beschreibt. Somit kann auf einfache und zuverlässige Weise der Schätzwert für den zweiten Abstandswert und somit der Referenzwert für den Differenzwert bestimmt werden.

Weiterhin ist es vorteilhaft, wenn der Referenzwert in Abhängigkeit von einer Einbauhöhe des Abstandssensors an und/oder in dem Kraftfahrzeug bestimmt wird. Der Abstandssensor kann beispielsweise in oder hinter einem Stoßfänger des Kraftfahrzeugs angeordnet sein. Alternativ dazu kann der Abstandssensor in oder hinter einem Karosseriebauteil, beispielsweise einer Tür des Kraftfahrzeugs angeordnet sein. Anhand der Information über die Einbaulage des Abstandssensors kann die relative Lage zwischen dem Abstandssensor und dem Objekt bestimmt werden. Insbesondere kann die kürzeste Entfernung zu dem Objekt und die kürzeste Entfernung zu dem Fußpunkt des Objekts bestimmt bzw. berechnet werden. Auf diese Weise kann zuverlässig ein Referenzwert ermittelt werden.

Ein erfindungsgemäßes Fahrerassistenzsystem umfasst zumindest einen Abstandssensor und eine Steuereinrichtung, welche zum Durchführen eines erfindungsgemäßen Verfahrens ausgelegt ist. Die Steuereinrichtung kann beispielsweise durch ein Steuergerät (Electronic Control Unit, ECU) des Kraftfahrzeugs gebildet sein.

Bevorzugt ist die Steuereinrichtung dazu ausgelegt, anhand der mit dem zumindest einen Abstandssensor bestimmten Höhe des zumindest einen Objekts eine durch das zumindest eine Objekt begrenzte Parklücke zu erkennen. Die Steuereinrichtung ist dazu ausgelegt, anhand des ersten und des zweiten Abstandswerts die Höhe des Objekts zu bestimmen. So kann beispielsweise ein hohes von einem niedrigen Objekt unterschieden werden. Somit kann insbesondere ein Bordstein erkannt werden. Insbesondere kann erkannt werden, ob das Hindernis überfahren werden kann bzw. ob das Kraftfahrzeug über das Objekt hinweg bewegt werden kann. So kann beispielsweise zwischen einer Parkflächenmarkierung, eines Bordsteins und parkenden Fahrzeugen unterschieden werden. Auf diese Weise kann eine Parklücke also ein freier Stellplatz zuverlässig erkannt werden.

In einer weiteren Ausführungsform ist die Steuereinrichtung dazu ausgebildet, anhand der mit dem zumindest einen Abstandssensor bestimmten Höhe des zumindest einen Objekts eine Notbremsung durchzuführen. Anhand der bestimmten Höhe des Objekts kann unterschieden werden, ob das Objekt ein Hindernis darstellt, mit dem eine Kollision droht. Weiterhin kann ermittelt werden, ob das Kraftfahrzeug über das Objekt fahren kann. Anhand dieser Information kann entschieden werden, ob eine autonome Notbremsung eingeleitet wird oder nicht.

Weiterhin ist es vorteilhaft, wenn die Steuereinrichtung dazu ausgelegt ist, anhand der mit dem zumindest einen Abstandssensor bestimmten Höhe des zumindest einen Objekts einen Eingriff in eine Lenkung und/oder eine Bremsanlage und/oder eine Antriebseinrichtung des Kraftfahrzeugs durchzuführen. Mit anderen Worten kann das Kraftfahrzeug anhand der bestimmten Höhe des zumindest einen Objekts zumindest semi-autonom manövriert werden. Beispielsweise kann ein Eingriff in die Lenkung des Kraftfahrzeugs erfolgen, während der Fahrer weiterhin das Gaspedal und die Bremse betätigt. Es ist auch denkbar, dass das Kraftfahrzeug mittels der Steuereinrichtung autonom manövriert wird. In diesem Fall übernimmt das Fahrerassistenzsystem auch den Eingriff in die Bremse und die Antriebseinrichtung bzw. den Antriebsmotor des Kraftfahrzeugs.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand eines bevorzugten Ausführungsbeispiels sowie unter Bezugnahme auf die beigefügten Zeichnungen näher erläutert.

Dabei zeigen:
- Fig. 1: in schematischer Darstellung ein Kraftfahrzeug gemäß einer Ausführungsform der Erfindung;
- Fig. 2: das Kraftfahrzeug gemäß Fig. 1, welches auf ein erstes Objekt zu bewegt wird; und
- Fig. 3: das Kraftfahrzeug gemäß Fig. 1, welches auf ein zweites und ein drittes Objekt zu bewegt wird.

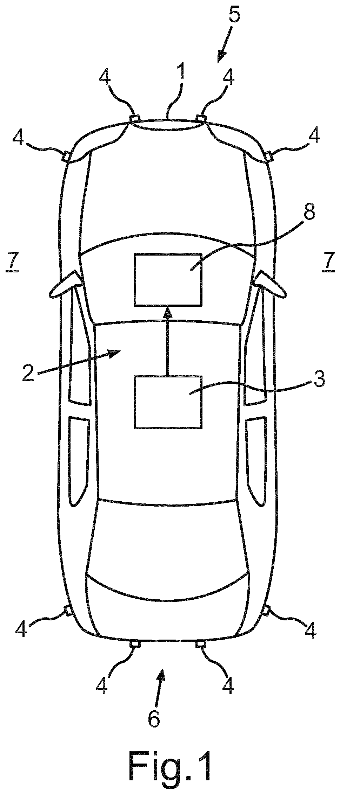

Fig. 1 zeigt ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 kann beispielsweise dazu ausgebildet sein, autonom eine Notbremsung durchzuführen. Alternativ oder zusätzlich kann das Fahrerassistenzsystem 2 dazu ausgelegt sein, eine Parklücke zu erkennen und das Kraftfahrzeug 1 zumindest semi-autonom in die erkannte Parklücke einzuparken.

Das Fahrerassistenzsystem 2 umfasst wiederum eine Steuereinrichtung 3. Die Steuereinrichtung 3 kann beispielsweise durch ein Steuergerät des Kraftfahrzeugs 1 gebildet sein. Des Weiteren umfasst das Fahrerassistenzsystem 2 zumindest einen Abstandssensor 4. In dem vorliegenden Ausführungsbeispiel umfasst das Fahrerassistenzsystem 2 acht Abstandssensoren 4. Dabei sind vier Abstandssensoren 4 in einem Frontbereich 5 des Kraftfahrzeugs 1 und vier Abstandssensoren 4 in einem Heckbereich 6 des Kraftfahrzeugs 1 angeordnet. Die Abstandssensoren 4 sind insbesondere dazu ausgebildet, zumindest ein Objekt 9a, 9b, 9c in einem Umgebungsbereich 7 des Kraftfahrzeugs 1 zu erfassen. Des Weiteren können die Abstandssensoren 4 insbesondere dazu ausgelegt sein, einen Abstand zu dem zumindest einen Objekt 9a, 9b, 9c in einem Umgebungsbereich 7 des Kraftfahrzeugs 1 zu erfassen. Die Abstandssensoren 4 können beispielsweise als Ultraschallsensoren, Radarsensoren, Laserscanner oder dergleichen ausgebildet sein.

Ferner umfasst das Kraftfahrzeug 1 bzw. das Fahrerassistenzsystem 2 eine Stelleinrichtung 8. Die Stelleinrichtung 8 ist dazu ausgelegt, einen Eingriff in die Lenkung und/oder Bremsanlagen und/oder einen Antriebsmotor des Kraftfahrzeugs 1 durchzuführen. Die Stelleinrichtung 8 ist mit einem entsprechenden Datenkabel mit der Steuereinrichtung 3 zur Datenübertragung verbunden. Ferner sind die Abstandssensoren 4 zur Datenübertragung mit der Steuereinrichtung 3 verbunden. Entsprechende Datenleitungen sind vorliegend der Übersichtlichkeit halber nicht gezeigt.

Zumindest einer der Abstandssensoren 4 soll nun dazu genutzt werden, eine Höhe des Objekts 9a, 9b, 9c zu bestimmen. Dazu wird der zumindest eine Abstandssensor 4 in zeitlich aufeinanderfolgenden Messzyklen betrieben. In jedem der Messzyklen wird mit dem Abstandssensor 4 ein Sendesignal ausgesendet. Dieses Sendesignal wird an dem zumindest einen Objekt 9a, 9b, 9c reflektiert und trifft wieder auf den Abstandssensor 4. Dabei wird das Sendesignal üblicherweise mehrfach reflektiert, so dass mehrere Echos des Sendesignals auf den Abstandssensor 4 treffen.

Zum Bestimmen der Höhe des zumindest einen Objekts 9a, 9b, 9c wird das Kraftfahrzeug 1 relativ zu dem Objekt 9a, 9b, 9c bewegt. Das Kraftfahrzeug 1 kann beispielsweise zu dem zumindest einen Objekt 9a, 9b, 9c hin bewegt. In jedem der Messzyklen wird anhand der Laufzeit zwischen dem Aussenden des Sendesignals und dem Empfangen des ersten Echos ein erster Abstandswert a1 bestimmt. Zudem wird anhand der Laufzeit zwischen dem Aussenden des Sendesignals und dem Empfangen des zweiten Echos ein zweiter Abstandswert a2 bestimmt. Zudem wird mittels der Steuereinrichtung 3 ein Differenzwert bestimmt, welcher eine Differenz bzw. einen Unterschied zwischen dem zweiten Abstandswert a2 und dem ersten Abstandswert a1 beschreibt.

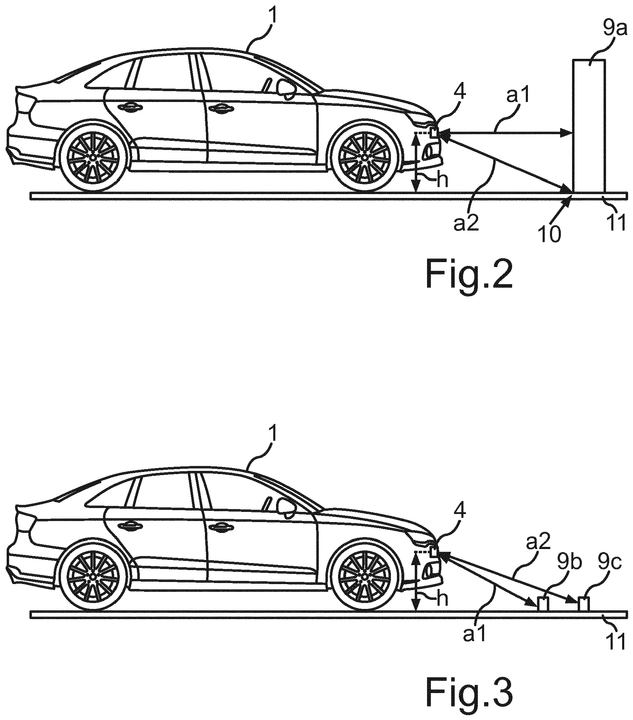

Vorliegend wird nun die Änderung des Differenzwerts zwischen zumindest zwei der Messzyklen bestimmt. Anhand der Änderung des Differenzwerts kann überprüft werden, ob es sich bei dem Objekt 9a, 9b, 9c um ein hohes oder um ein niedriges Objekt handelt. Zur Plausibilisierung des Differenzwerts kann auch ein Referenzwert herangezogen werden. Dieser Referenzwert kann beispielsweise anhand eines Schätzwerts für den zweiten Abstandswert a2 bestimmt werden. Dieser Schätzwert für den zweiten Abstandswert a2 kann unter der Annahme bestimmt werden, dass es sich um ein hohes Objekt 9a, 9b, 9c handelt. Dies wird nachfolgend anhand von Fig. 2 erläutert.

Fig. 2 zeigt das Kraftfahrzeug 1, das sich auf ein erstes Objekt 9a zu bewegt. Bei dem Objekt 9a handelt es sich um ein hohes Objekt. Die vorliegende Momentaufnahme zeigt die Durchführung eines Messzyklus. Dabei wird das Sendesignal ausgesendet. Dieses wird vom Objekt 9a reflektiert. Hierbei wird angenommen, dass der erste Abstandswert a1 die kürzeste Entfernung zwischen dem Abstandssensor 4 und dem ersten Objekt 9a beschreibt. Weiterhin wird angenommen, dass der zweite Abstandswert a2 die kürzeste Entfernung zwischen dem Abstandssensor 4 und einem Fußpunkt 10 des ersten Objekts 9a beschreibt. Der Fußpunkt 10 entspricht dem Bereich des ersten Objekts 9a, der an die Oberfläche 11, insbesondere die Fahrbahnoberfläche, grenzt. Ferner ist die Einbauhöhe h des Abstandssensors 4 bekannt. Die Einbauhöhe h wird ausgehend von der Oberfläche 11 entlang der Fahrzeughochachse bestimmt. In dem vorliegenden Ausführungsbeispiel kann die Einbauhöhe h beispielsweise 40 cm betragen.

Für den ersten Abstandswert a1 kann sich beispielsweise ein Wert von 100 cm ergeben und für den zweiten Abstandswert a2 kann sich beispielsweise ein Wert von 109 cm ergeben. Zur Berechnung des Schätzwerts für den zweiten Abstandswert a2 kann nun angenommen werden, dass durch den ersten Abstandswert a1, den zweiten Abstandswert a2 und die Einbauhöhe h ein rechtwinkliges Dreieck gebildet wird. Dabei beschreibt der Abstandswert a1 die Ankathete, die Einbauhöhe h die Gegenkathete und der zweite Abstandswert a2 die Hypotenuse des Dreiecks. Wenn der erste Abstandswert a1 anhand der Laufzeit zwischen dem Aussenden des Sendesignals und dem Empfangen des ersten Echos bestimmt wird, kann der zweite Abstandswert a2 berechnet werden. Dieser berechnet sich aus der Wurzel der Einbauhöhe h zum Quadrat und des ersten Abstandswerts a1 zum Quadrat. Für das oben genannte Beispiel ergibt sich hierfür ein Schätzwert von 107,7 cm. Der gemessene zweite Abstandswert a2 beträgt 109 cm. Mit der Beaufschlagung eines Toleranzwerts kann nun festgestellt werden, dass der Schätzwert für den zweiten Abstandswert a2 mit dem gemessenen Abstandswert a2 im Wesentlichen übereinstimmt. Es kann also davon ausgegangen werden, dass es sich um ein hohes Objekt handelt.

Fig. 3 zeigt ein weiteres Ausführungsbeispiel, bei welchem sich das Kraftfahrzeug 1 auf ein zweites Objekt 9b und ein drittes Objekt 9c zu bewegt. Das zweite Objekt 9b und das dritte Objekt 9c sind vorliegend niedrige Hindernisse, die von dem Kraftfahrzeug 1 überfahren werden können. Vorliegend ergibt sich für die Messung des ersten Abstandswerts a1 ein Wert von 100 cm und für die Messung des zweiten Abstandswerts a2 ein Wert von 119 cm. Hier ergibt sich für den Schätzwert des zweiten Abstandswerts a2 nach der oben beschriebenen Berechnung ein Wert von 107,7 cm. Gemessen wurde aber ein zweiter Abstandswert von 119 cm. Selbst mit Beaufschlagung einer Toleranz passt der gemessene zweite Abstandswert a2 nicht zum Schätzwert für den zweiten Abstandswert a2. Es kann davon ausgegangen werden, dass das zweite Echo nicht von einem einzigen Objekt und insbesondere nicht von einem hohen Objekt stammt.

Hierbei ist es auch möglich, anhand der Abstandswerte a1 und a2 den Abstand zwischen dem zweiten Objekt 9b und dem dritten Objekt 9c zu bestimmen. Vorliegend wird berücksichtigt, dass sich der Differenzwert, also die Differenz zwischen dem zweiten Abstandswert a2 und dem ersten Abstandswert a1 über den Entfernungsbereich zwischen dem Abstandssensor 4 und dem Objekt 9a, 9b, 9c in unterschiedlicher Weise ändert. Für das Ausführungsbeispiel gemäß Fig. 3 bleibt die Differenz, die vorliegend ca. 20 cm beträgt, über den gesamten Abstandsbereich annähernd konstant, so dass sich beispielsweise für einen Abstand von 300 cm zwischen dem Abstandssensor 4 und dem Objekt 9a, 9b, 9c wie auch für kurze Abstände, beispielsweise 100 cm, der gleiche Differenzwert ergibt.

Der Differenzwert gemäß dem Beispiel von Fig. 2, der vorliegend 9 cm beträgt, variiert über den Entfernungsbereich. Der Differenzwert ist für große Abstände zwischen dem Abstandssensor 4 und dem Objekt 9a groß und für geringe Abstände zwischen dem Abstandssensor 4 und dem Objekt 9a gering. Diese Eigenschaft kann nun genutzt werden, um die Objekte 9a, 9b, 9c voneinander zu unterscheiden. Insbesondere kann das Verfahren genutzt werden, wenn zufälligerweise der Differenzwert, also der Abstand zwischen dem ersten und dem zweiten Echo einem hohen und bei niedrigen Objekten identisch ist. Hier kann alleine auf Basis der Berechnung keine Unterscheidung vorgenommen werden. Bewegt sich das Kraftfahrzeug 1 aber relativ zu dem Objekt 9a, 9b, 9c ändern sich die Differenzwerte und eine Entscheidung ist somit möglich. Dies tritt vor allem bei kurzen Abständen zwischen dem Abstandssensor 4 und dem Objekt 9a, 9b, 9c auf.

Somit kann ein einfacher Algorithmus zum Bestimmen der Höhe des Objekts 9a, 9b, 9c bereitgestellt werden. Dieser ist unabhängig von der Anzahl der Abstandssensoren 4 des Kraftfahrzeugs 1. Zudem kann eine schnelle Abschätzung der Höhe des Objekts 9a, 9b, 9c ermöglicht werden. Das Verfahren kann kostengünstig und mit wenig Rechenleistung ermöglicht werden.

## Patentansprüche

1. Verfahren zum Erfassen zumindest eines Objekts (9a, 9b, 9c) in einem Umgebungsbereich (7) eines Kraftfahrzeugs (1) mittels eines Fahrerassistenzsystems (2), bei welchem in zeitlich aufeinander folgenden Messzyklen mit einem Abstandssensor (4) jeweils in jedem der Messzyklen:
- ein Sendesignal ausgesendet wird und
- ein erstes und ein zweites Echo des von dem zumindest einen Objekt (9a, 9b, 9c) reflektierten Sendesignals empfangen wird und
- mittels einer Steuereinrichtung (3) anhand des ersten Echos ein erster Abstandswert (a1) bestimmt wird und anhand des zweiten Echos ein zweiter Abstandswert (a2) bestimmt wird,
und wobei eine Höhe des zumindest einen Objekts (9a, 9b, 9c) anhand des ersten Abstandswerts (a1) und des zweiten Abstandswerts (a2) bestimmt wird, wobei die Messzyklen während einer Relativbewegung des Kraftfahrzeugs (1) zu dem zumindest einen Objekt (9a, 9b, 9c) durchgeführt werden, bei zumindest zwei der Messzyklen jeweils ein Differenzwert bestimmt wird, welcher einen Unterschied zwischen dem zweiten Abstandswert (a2) und dem ersten Abstandswert (a1) beschreibt, **dadurch gekennzeichnet, dass** die Höhe des zumindest einen Objekts (9a, 9b, 9c) anhand einer Änderung des jeweils bei den zumindest zwei Messzyklen bestimmten Differenzwerts bestimmt wird.

2. Verfahren nach Anspruch 1,
**dadurch gekennzeichnet, dass**
das zumindest eine Objekt (9a, 9b, 9c) als hoch charakterisiert wird, falls die Änderung des Differenzwerts einen vorbestimmten Schwellenwert überschreitet.

3. Verfahren nach Anspruch 1 oder 2,
**dadurch gekennzeichnet, dass**
für jeden der Messzyklen ein Referenzwert für den Differenzwert bestimmt wird und der Referenzwert mit dem bestimmten Differenzwert verglichen wird.

4. Verfahren nach Anspruch 3,
**dadurch gekennzeichnet, dass**
bei dem Vergleich des Referenzwerts mit dem bestimmten Differenzwert ein Toleranzwert berücksichtigt wird.

5. Verfahren nach Anspruch 3 oder 4,
**dadurch gekennzeichnet, dass**
der Referenzwert anhand eines Schätzwerts für den zweiten Abstandswert (a2) bestimmt wird, welcher anhand des ersten Abstandswerts (a1) berechnet wird.

6. Verfahren nach Anspruch 5,
**dadurch gekennzeichnet, dass**
der Schätzwerts für den zweiten Abstandswert (a2) unter der Annahme bestimmt wird, dass das zweite Echo von einer Reflexion des Sendesignals in einem Bereich eines Fußpunkts (10) des zumindest einen Objekts (9a, 9b, 9c) stammt.

7. Verfahren nach einem der Ansprüche 3 bis 6,
**dadurch gekennzeichnet, dass**
der Referenzwert in Abhängigkeit von einer Einbauhöhe (h) des Abstandssensors (4) an und/oder in dem Kraftfahrzeug (1) bestimmt wird.

8. Fahrerassistenzsystem (2) mit zumindest einem Abstandssensor (4) und mit einer Steuereinrichtung (3), welche zum Durchführen eines Verfahrens nach einem der vorhergehenden Ansprüche ausgelegt ist.

9. Fahrerassistenzsystem (2) nach Anspruch 8,
**dadurch gekennzeichnet, dass**
die Steuereinrichtung (3) dazu ausgelegt ist, anhand der mit dem zumindest einen Abstandssensor (4) bestimmten Höhe des zumindest einen Objekts (9a, 9b, 9c) eine durch das zumindest eine Objekt (9a, 9b, 9c) begrenzte Parklücke zu erkennen.

10. Fahrerassistenzsystem (2) nach Anspruch 8 oder 9,
**dadurch gekennzeichnet, dass**
die Steuereinrichtung (3) dazu ausgelegt ist, anhand der mit dem zumindest einen Abstandssensor (4) bestimmten Höhe des zumindest einen Objekts (9a, 9b, 9c) eine Notbremsung durchzuführen.

11. Fahrerassistenzsystem (2) nach einem der Ansprüche 8 bis 10,
**dadurch gekennzeichnet, dass**
die Steuereinrichtung (3) dazu ausgelegt ist, anhand der mit dem zumindest einen Abstandssensor (4) bestimmten Höhe des zumindest einen Objekts (9a, 9b, 9c) einen Eingriff in eine Lenkung und/oder eine Bremsanlage und/oder eine Antriebseinrichtung des Kraftfahrzeugs (1) durchzuführen.

12. Kraftfahrzeug (1) mit einem Fahrerassistenzsystem (2) nach einem der Ansprüche 8 bis 11.

## Claims

1. Method for detecting at least one object (9a, 9b, 9c) in a surrounding area (7) of a motor vehicle (1) by way of a driver assistance system (2), in which, in temporally consecutive measurement cycles involving a distance sensor (4), in each case in each of the measurement cycles:
- a transmission signal is transmitted and
- a first and a second echo of the transmission signal reflected from the at least one object (9a, 9b, 9c) is received and
- a first distance value (a1) is determined on the basis of the first echo and a second distance value (a2) is determined on the basis of the second echo by way of a controller (3),
and wherein a height of the at least one object (9a, 9b, 9c) is determined on the basis of the first distance value (a1) and of the second distance value (a2), wherein the measurement cycles are performed during relative movement of the motor vehicle (1) with respect to the at least one object (9a, 9b, 9c), a respective difference value that describes a difference between the second distance value (a2) and the first distance value (a1) is determined in at least two of the measurement cycles, **characterized in that**
the height of the at least one object (9a, 9b, 9c) is determined on the basis of a change in the difference value determined in each case in the at least two measurement cycles.

2. Method according to Claim 1,
**characterized in that**
the at least one object (9a, 9b, 9c) is characterized as tall if the change in the difference value exceeds a predetermined threshold value.

3. Method according to Claim 1 or 2,
**characterized in that**,
for each of the measurement cycles, a reference value for the difference value is determined and the reference value is compared with the determined difference value.

4. Method according to Claim 3,
**characterized in that**
a tolerance value is taken into consideration in the comparison of the reference value with the determined difference value.

5. Method according to Claim 3 or 4,
**characterized in that**
the reference value is calculated on the basis of an estimated value for the second distance value (a2) that is calculated on the basis of the first distance value (a1) .

6. Method according to Claim 5,
**characterized in that**
the estimated value for the second distance value (a2) is determined under the assumption that the second echo originates from a reflection of the transmission signal in an area of a base (10) of the at least one object (9a, 9b, 9c).

7. Method according to one of Claims 3 to 6,
**characterized in that**
the reference value is determined depending on an installation height (h) of the distance sensor (4) on and/or in the motor vehicle (1).

8. Driver assistance system (2) having at least one distance sensor (4) and having a controller (3) that is designed to perform a method according to one of the preceding claims.

9. Driver assistance system (2) according to Claim 8,
**characterized in that**
the controller (3) is designed to identify a parking space bounded by the at least one object (9a, 9b, 9c) on the basis of the height of the at least one object (9a, 9b, 9c) as determined by the at least one distance sensor (4) .

10. Driver assistance system (2) according to Claim 8 or 9,
**characterized in that**
the controller (3) is designed to perform emergency braking on the basis of the height of the at least one object (9a, 9b, 9c) as determined by the at least one distance sensor (4).

11. Driver assistance system (2) according to one of Claims 8 to 10,
**characterized in that**
the controller (3) is designed to perform an intervention in a steering system and/or a braking system and/or a drive apparatus of the motor vehicle (1) on the basis of the height of the at least one object (9a, 9b, 9c) as determined by the at least one distance sensor (4).

12. Motor vehicle (1) having a driver assistance system (2) according to one of Claims 8 to 11.

## Revendications

1. Procédé de détection d'au moins un objet (9a, 9b, 9c) dans l'entourage (7) d'un véhicule automobile (1) au moyen d'un système d'assistance au conducteur (2), dans lequel, dans des cycles de mesure se succédant dans le temps, respectivement à chacun des cycles de mesure, un capteur de distance (4) :
- émet un signal d'émission, et
- reçoit un premier et un deuxième écho du signal d'émission réfléchi par ledit au moins un objet (9a, 9b, 9c), et
- un dispositif de commande (3) détermine une première valeur de distance (a1) à l'aide du premier écho et détermine une deuxième valeur de distance (a2) à l'aide du deuxième écho,
et dans lequel une hauteur dudit au moins un objet (9a, 9b, 9c) est déterminée à l'aide de la première valeur de distance (a1) et de la deuxième valeur de distance (a2), dans lequel les cycles de mesure sont effectués pendant un déplacement relatif du véhicule automobile (1) par rapport audit au moins un objet (9a, 9b, 9c), une valeur de différence est déterminée dans au moins deux des cycles de mesure et décrit une différence entre la deuxième valeur de distance (a2) et la première valeur de distance (a1),
**caractérisé en ce que** la hauteur dudit au moins un objet (9a, 9b, 9c) est déterminée à l'aide d'une modification de la valeur de différence déterminée respectivement dans les au moins deux cycles de mesure.

2. Procédé selon la revendication 1, **caractérisé en ce que** ledit au moins un objet (9a, 9b, 9c) est caractérisé comme étant élevé si la modification de la valeur de différence dépasse une valeur seuil prédéterminée.

3. Procédé selon la revendication 1 ou 2, **caractérisé en ce que** pour chacun des cycles de mesure, une valeur de référence est déterminée pour la valeur de différence et la valeur de référence est comparée à la valeur de différence déterminée.

4. Procédé selon la revendication 3, **caractérisé en ce qu'**une valeur de tolérance est prise en compte lorsque la valeur de référence est comparée à la valeur de différence déterminée.

5. Procédé selon la revendication 3 ou 4, **caractérisé en ce que** la valeur de référence est déterminée à l'aide d'une valeur estimée pour la deuxième valeur de distance (a2) qui est calculée à l'aide de la première valeur de distance (a1).

6. Procédé selon la revendication 5, **caractérisé en ce que** la valeur estimée est déterminée pour la deuxième valeur de distance (a2) en supposant que le deuxième écho provient d'une réflexion du signal d'émission dans une zone d'un point de base (10) dudit au moins un objet (9a, 9b, 9c).

7. Procédé selon l'une quelconque des revendications précédentes 3 à 6, **caractérisé en ce que** la valeur de référence est déterminée en fonction d'une hauteur d'installation (h) du capteur de distance (4) sur et/ou dans le véhicule automobile (1).

8. Système d'assistance au conducteur (2), comprenant au moins un capteur de distance (4) et un dispositif de commande (3) qui est conçu pour effectuer un procédé selon l'une quelconque des revendications précédentes.

9. Système d'assistance au conducteur (2) selon la revendication 8, **caractérisé en ce que** le dispositif de commande (3) est conçu pour reconnaître à l'aide de la hauteur dudit au moins un objet (9a, 9b, 9c) déterminée par ledit au moins un capteur de distance (4) une place de stationnement délimitée par ledit au moins un objet (9a, 9b, 9c).

10. Système d'assistance au conducteur (2) selon la revendication 8 ou 9, **caractérisé en ce que** le dispositif de commande (3) est conçu pour effectuer un freinage d'urgence à l'aide de la hauteur dudit au moins un objet (9a, 9b, 9c) déterminée par ledit au moins un capteur de distance (4).

11. Système d'assistance au conducteur (2) selon l'une quelconque des revendications 8 à 10, **caractérisé en ce que** le dispositif de commande (3) est conçu pour effectuer une intervention sur une direction et/ou un système de freinage et/ou un dispositif d'entraînement du véhicule automobile (1) à l'aide de la hauteur dudit au moins un objet (9a, 9b, 9c) déterminée par ledit au moins un capteur de distance (4).

12. Véhicule automobile (1) comprenant un système d'assistance au conducteur (2) selon l'une quelconque des revendications 8 à 11.
